(19) **Europäisches Patentamt European Patent Office Office européen des brevets**

(11) **EP 4 664 416 A1**

(12) **EUROPEAN PATENT APPLICATION**
published in accordance with Art. 153(4) EPC

(43) Date of publication:
**17.12.2025 Bulletin 2025/51**

(51) International Patent Classification (IPC):
***G06V 10/774*** (2022.01)

(21) Application number: **24850720.4**

(22) Date of filing: **03.07.2024**

(86) International application number:
**PCT/CN2024/103405**

(87) International publication number:
**WO 2025/031069 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 CN 202310990607**

(71) Applicant: **Tencent Technology (Shenzhen) Company Limited**
**Shenzhen, Guangdong 518057 (CN)**

(72) Inventors:
• **ZHENG, Tianyi**
**Shenzhen, Guangdong 518057 (CN)**

• **LI, Bo**
**Shenzhen, Guangdong 518057 (CN)**
• **WU, Shuang**
**Shenzhen, Guangdong 518057 (CN)**
• **LIU, Shice**
**Shenzhen, Guangdong 518057 (CN)**
• **MU, Guodong**
**Shenzhen, Guangdong 518057 (CN)**
• **DING, Shouhong**
**Shenzhen, Guangdong 518057 (CN)**

(74) Representative: **Nederlandsch Octrooibureau**
**P.O. Box 29720**
**2502 LS The Hague (NL)**

(54) **TRAINING METHOD AND APPARATUS FOR LIVENESS DETECTION MODEL, AND MEDIUM, ELECTRONIC DEVICE AND PRODUCT**

(57)     This application belongs to the field of artificial intelligence technologies, and specifically relates to a live-body detection model training method and apparatus, a medium, an electronic device, and a product. This application may be applied to various scenarios, for example, a cloud technology, artificial intelligence, intelligent traffic, or assisted driving. The training method includes: blocking a part of a region in a sample image to obtain a masked image including a non-masked region, the non-masked region being an unblocked region in the masked image; obtaining an encoding feature of the non-masked region that is obtained by performing feature extraction on the non-masked region by an encoder; obtaining an output image obtained by performing feature restoration on the encoding feature of the non-masked region by a decoder; and updating model parameters of the encoder and the decoder according to a reconstruction loss value between the output image and the sample image. Recognition accuracy of live-body detection may be improved according to embodiments of this application.

```
┌─────────────────────────────────────┐ ⎫ S210
│ Block a part of a region in a sample │
│ image to obtain a masked image       │
│ including a non-masked region, where │
│ the non-masked region is an unblocked│
│ region in the masked image           │
└─────────────────────────────────────┘
                  │
                  ▼
┌─────────────────────────────────────┐ ⎫ S220
│ Obtain an encoding feature of the    │
│ non-masked region that is obtained by│
│ performing feature extraction on the │
│ non-masked region by an encoder      │
└─────────────────────────────────────┘
                  │
                  ▼
┌─────────────────────────────────────┐ ⎫ S230
│ Obtain a reconstructed image obtained│
│ by performing feature restoration on │
│ the encoding feature of the non-     │
│ masked region by a decoder           │
└─────────────────────────────────────┘
                  │
                  ▼
┌─────────────────────────────────────┐ ⎫ S240
│ Update model parameters of the       │
│ encoder and the decoder according to │
│ a reconstruction loss error          │
│ between the reconstructed image and  │
│ the sample image                     │
└─────────────────────────────────────┘
```

**FIG. 2**

**Description**

RELATED APPLICATION

This application claims priority to Chinese Patent Application No. 2023109906078, filed with the China National Intellectual Property Administration on August 8, 2023 and entitled "LIVE-BODY DETECTION MODEL TRAINING METHOD AND APPARATUS, MEDIUM, AND ELECTRONIC DEVICE", which is incorporated herein by reference in its entirety.

FIELD OF THE TECHNOLOGY

This application belongs to the field of artificial intelligence technologies, and specifically, to a live-body detection model training method, a live-body detection model training apparatus, a computer-readable medium, an electronic device, and a computer program product.

BACKGROUND OF THE DISCLOSURE

Face recognition is a biometric recognition technology that performs identity recognition based on face feature information of a person. A user identity may be authenticated through the face recognition, to provide a service for a real user who has passed authentication. However, an illegal individual or a fake user may usually interfere with a face recognition result in various cheating manners such as a photo attack, a video attack, or a model attack, causing a problem of poor recognition accuracy.

SUMMARY

This application provides a live-body detection model training method, a live-body detection model training apparatus, a computer-readable medium, an electronic device, and a computer program product, to improve recognition accuracy of live-body detection.

According to an aspect of embodiments of this application, a live-body detection model training method is provided, the live-body detection model including an encoder configured to extract an encoding feature from an image, and the encoding feature being configured to recognize whether an object in the image is a living object; and the training method including:

blocking a part of a region in a sample image to obtain a masked image including a non-masked region, the non-masked region being an unblocked region in the masked image;

obtaining an encoding feature of the non-masked region that is obtained by performing feature extraction on the non-masked region by the encoder;

obtaining an output image obtained by performing feature restoration on the encoding feature of the non-masked region by a decoder, the encoding feature of the non-masked region also being referred to as a region encoding feature; and

updating model parameters of the encoder and the decoder according to a reconstruction loss value between the output image and the sample image.

According to an aspect of the embodiments of this application, a live-body detection model training apparatus is provided, the live-body detection model including an encoder configured to extract an encoding feature from an image, and the encoding feature being configured to recognize whether an object in the image is a living object; and the training apparatus including:

a blocking module, configured to block a part of a region in a sample image to obtain a masked image including a non-masked region, the non-masked region being an unblocked region in the masked image;

an encoding module, configured to obtain an encoding feature of the non-masked region that is obtained by performing feature extraction on the non-masked region by the encoder;

a decoding module, configured to obtain an output image obtained by performing feature restoration on the encoding feature of the non-masked region by a decoder; and

an update module, configured to update model parameters of the encoder and the decoder according to a reconstruction loss value between the output image and the sample image.

In some embodiments of this application, based on the foregoing technical solutions, the sample image includes a live-body sample image corresponding to a living object and a non-live-body sample image corresponding to a non-living object. The live-body detection model training apparatus further includes:

a sample pair obtaining module, configured to combine two sample images into a sample pair, the sample pair including a positive sample pair formed by two live-body sample images, or a negative sample pair formed by one live-body sample image and one non-live-body sample image;

a feature comparison module, configured to compare encoding features of the two sample images in the sample pair, to obtain a feature similarity of the sample pair;

an error determining module, configured to determine a contrastive loss value of the sample image according to the feature similarity, the contrastive loss value being configured for representing a capability of the encoder to extract similar encoding features from a plurality of sample images corresponding to the living object; and

a parameter update module, configured to update the model parameter of the encoder according to the contrastive loss value.

In some embodiments of this application, based on the foregoing technical solutions, the parameter update module is further configured to: obtain an error threshold configured for representing a convergence degree of the encoder; and update the model parameter of the encoder according to the contrastive loss value when the reconstruction loss value is less than the error threshold.

In some embodiments of this application, based on the foregoing technical solutions, the error determining module is further configured to: respectively allocate different weight coefficients to the positive sample pair and the negative sample pair; and determine the contrastive loss value of the sample image according to the weight coefficient and the feature similarity.

In some embodiments of this application, based on the foregoing technical solutions, the weight coefficient of the positive sample pair is greater than the weight coefficient of the negative sample pair.

In some embodiments of this application, based on the foregoing technical solutions, the positive sample pair includes a same-domain positive sample pair and a non-same-domain positive sample pair, the same-domain positive sample pair including two live-body image samples with the same domain label, the non-same-domain positive sample pair including two live-body image samples with different domain labels, and the domain label is configured for indicating category information of the live-body image samples; and a weight coefficient of the non-same-domain positive sample pair is greater than a weight coefficient of the same-domain positive sample pair.

In some embodiments of this application, based on the foregoing technical solutions, the blocking module includes:

an image segmentation module, configured to segment the sample image into a plurality of tiles having the same size; and

a tile blocking module, configured to randomly block several tiles in the sample image to obtain a masked image, the masked image including a masked region formed by blocked tiles and a non-masked region formed by unblocked tiles.

In some embodiments of this application, based on the foregoing technical solutions, a quantity of tiles in the masked region is greater than a quantity of tiles in the non-masked region.

In some embodiments of this application, based on the foregoing technical solutions, the encoding module includes:

a first mapping module, configured to perform linear mapping on each tile in the non-masked region, to obtain a semantic feature vector of the tile;

a first order determining module, configured to determine an encoding order of the tiles according to distribution positions of the tiles in the sample image;

a first feature extraction module, configured to obtain an encoding feature of each tile that is obtained by performing feature extraction on the semantic feature vector of the tile by the encoder; and

a feature concatenating module, configured to concatenate the encoding features of the tiles according to the encoding order of the tiles to form the encoding feature of the non-masked region.

In some embodiments of this application, based on the foregoing technical solutions, the encoding module includes:

a second mapping module, configured to perform linear mapping on each tile in the non-masked region, to obtain a semantic feature vector of the non-masked region;

a first position determining module, configured to determine a position feature vector of the non-masked region according to a distribution position of the tile in the sample image; and

a second feature extraction module, configured to obtain the encoding feature of the non-masked region that is obtained by performing feature extraction on the semantic feature vector of the non-masked region and the position feature vector of the non-masked region by the encoder.

In some embodiments of this application, based on the foregoing technical solutions, the decoding module includes:

a second order determining module, configured to determine an encoding order of the tiles according to distribution positions of the tiles in the sample image;

a feature input module, configured to concatenate the encoding feature of the non-masked region and an encoding feature of the masked region according to the encoding order, and then input the concatenated encoding feature of the non-masked region and encoding feature of the masked region to the decoder; and

a first feature restoration module, configured to obtain the output image obtained by performing feature restoration on the encoding feature of the non-masked region and the encoding feature of the masked region by the decoder.

In some embodiments of this application, based on the foregoing technical solutions, the decoding module includes:

a second position determining module, configured to determine a position feature vector of the non-masked region according to a distribution position of the tile in the sample image; and

a second feature restoration module, configured to obtain the output image obtained by performing feature restoration on the encoding feature of the non-masked region and the position feature vector of the non-masked region by the decoder.

In some embodiments of this application, based on the foregoing technical solutions, the live-body detection model further includes a classifier configured to recognize a live-body image according to the encoding feature. The live-body detection model training apparatus further includes:

a third feature extraction module, configured to obtain an encoding feature of an unblocked sample image that is obtained by performing feature extraction on the sample image by the encoder;

a feature classification module, configured to obtain a recognition result obtained by classifying the encoding feature of the sample image by the classifier, the recognition result being configured for representing whether the sample image is a live-body image; and

a parameter update module, configured to update the model parameter of the encoder and a model parameter of the classifier according to the recognition result.

According to an aspect of the embodiments of this application, a computer-readable medium is provided, having a computer program stored therein, the computer program, when executed by a processor, implementing the live-body detection model training method in the foregoing technical solutions.

According to an aspect of the embodiments of this application, an electronic device is provided. The electronic device includes: a processor; and a memory, configured to store executable instructions of the processor, the processor being configured to execute the executable instructions to perform the live-body detection model training method in the foregoing technical solutions.

According to an aspect of the embodiments of this application, a computer program product is provided, including a computer program, the computer program, when executed by a processor, implementing the live-body detection model training method in the foregoing technical solutions.

In the technical solutions provided in the embodiments of this application, the masked image including the non-masked region is obtained by blocking the part of the region in the sample image, the encoding feature of the non-masked region obtained by performing feature extraction on the non-masked region by the encoder is obtained, the output image obtained by performing feature restoration on the encoding feature of the non-masked region by the decoder is further obtained, and the model parameters of the encoder and the decoder are updated according to the reconstruction loss value between the output image and the sample image. In the embodiments of this application, a feature extraction capability of the encoder is trained in a manner of masked reconstruction, which can improve recognition accuracy of recognizing, by the live-body detection model, whether the sample image corresponds to the living object.

The foregoing general descriptions and the following detailed descriptions are merely exemplary and illustrative, and cannot limit this application.

BRIEF DESCRIPTION OF THE DRAWINGS

FIG. 1 is a block diagram of a system architecture to which a technical solution of this application is applied.

FIG. 2 shows a live-body detection model training method according to an embodiment of this application.

FIG. 3 is a schematic diagram of a process of training a live-body detection model according to an embodiment of this application.

FIG. 4 shows a method for training a live-body detection model based on contrastive learning according to an embodiment of this application.

FIG. 5 shows a method for training a live-body detection model based on an encoding order according to an embodiment of this application.

FIG. 6 shows a method for training a live-body detection model based on a tile position feature in an application scenario of this application.

FIG. 7 is a schematic diagram of a principle of training a live-body detection model in an application scenario according to an embodiment of this application.

FIG. 8 is a schematic structural block diagram of a live-body detection model training apparatus according to an embodiment of this application.

FIG. 9 is a schematic structural block diagram of a computer system of an electronic device suitable for implementing an embodiment of this application.

DESCRIPTION OF EMBODIMENTS

Exemplary implementations are described more comprehensively with reference to the accompanying drawings. However, the exemplary implementations can be implemented in a plurality of forms, and are not to be construed as being limited to examples described herein. On the contrary, these implementations are provided such that this application is more comprehensive and complete, and the concept of the exemplary implementations are fully conveyed to a person skilled in the art.

In addition, the described features, structures, or characteristics may be combined in one or more embodiments in any proper manner. In the following descriptions, many specific details are provided for comprehensive understanding of embodiments of this application. However, a person skilled in the art is to be aware that the technical solutions in this application may be implemented without one or more of particular details, or another method, unit, apparatus, or operation may be used. In other cases, well-known methods, apparatuses, implementations, or operations are not shown or described in detail, to avoid obscuring aspects of this application.

The block diagram shown in the accompanying drawings is merely a functional entity and does not necessarily correspond to a physically independent entity. To be specific, these functional entities may be implemented in a software form, or these functional entities may be implemented in one or more hardware modules or integrated circuits, or these functional entities may be implemented in different networks and/or processor apparatuses and/or microcontroller apparatuses.

The flowchart shown in the accompanying drawings is merely an exemplary description, does not need to include all content and operations/steps, and does not need to be performed in the described orders either. For example, some operations/steps may be further divided, while some operations/steps may be combined or partially combined. Therefore, an actual execution order may vary depending on an actual situation.

In a specific implementation of this application, related data such as a face image of a user is involved. When the embodiments of this application are applied to a specific product or technology, permission or consent of the user needs to be obtained, and collection, use, and processing of the related data need to comply with relevant laws, regulations, and standards of relevant countries and regions.

In the related art of this application, a live-body detection method based on deep learning may include a deep learning live-body detection method based on conventional binary classification, and a live-body detection algorithm added with meta-learning.

The deep learning live-body detection method based on conventional binary classification usually relies only on a label of the binary classification to supervise a deep network, and complex design of a network structure (that is, a feature extractor) is needed to improve network recognition precision. Although supervision of this type of method is simply and intuitively conforms to a task logic, generally, the type of method has a poor generalization capability on an unknown attack sample and data in a different photographing scene and on a different device from training data. Usually, in the type of method, a large quantity of data samples with various types are needed for training an algorithm model, and has high costs of data collection and labeling. In addition, design of a complex model relies on intuition and is not very interpretive.

The live-body detection algorithm added with meta-learning is based on binary classification supervision, and has a unique network structure design to improve a capability and generalization of feature learning. Although this type of method is generally better than the previous live-body detection method in terms of generalization, the network design thereof is usually complex, a difficulty of algorithm training convergence is high, and a precise training manner is needed to obtain a good result. For services, such an algorithm has high difficulty in iteration and cannot ensure stability, causing a risk to algorithm iteration.

In a service scenario of live-body detection, an amount of data that can be used for an optimized deep learning model is limited, and a malicious user continuously challenges, in a new live-body attack manner, a live-body detection system used in the service. In this case, continuous incremental attacks pose a severe challenge to a generalization capability and a feature extraction capability of a model algorithm.

For the foregoing problems existing in the related art, in the embodiments of this application, a pre-training framework for masked reconstruction of an image is first designed according to an idea of self-supervised learning. Based on a conventional binary classification supervision live-body detection deep learning framework, a capability of extracting features related to face live-body by a model is improved through self-supervised pre-training, thereby improving recognition precision of face live-body detection.

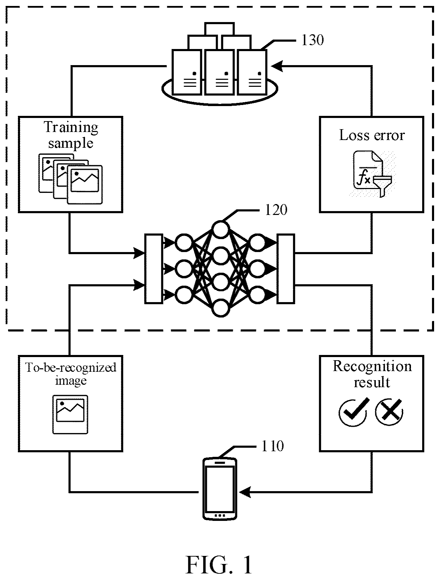

FIG. 1 is a block diagram of a system architecture to which a technical solution of this application is applied.

As shown in FIG. 1, the system architecture to which the technical solution of this application is applied may include a terminal device 110 and a server 130. The terminal device 110 may include various electronic devices such as a smartphone, a tablet computer, a notebook computer, a desktop computer, a smart speaker, a smart wearable device, a smart in-vehicle device, or a smart payment terminal. The server 130 may be an independent physical server, or may be a server cluster formed by a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. A communication medium of various connection types that is configured to provide a communication link may be included between the terminal device 110 and the server 130, and may be, for example, a wired communication link or a wireless communication link.

A live-body detection model 120 is a model configured to detect whether a service object is a real user (e.g., whether a service object is alive or not). For example, when face recognition is performed on the service object, live-body detection is performed on a collected image, to recognize whether the image is a face image of the real user, such that a face recognition result may not be interfered with a photo attack, a video attack, or a model attack.

In an application scenario of this embodiment of this application, the live-body detection model 120 may be deployed on the server 130 in advance, and the server 130 trains the live-body detection model 120. In a process of model training, a loss error may be determined according to a recognition result of the live-body detection model 120 for a training sample, and then a model parameter of the live-body detection model 120 is iteratively updated according to the loss error. Through continuous training, the loss error of the model can be gradually reduced, thereby improving recognition precision of the model.

After training is completed, the live-body detection model 120 may provide a live-body detection service for the terminal device 110. For example, the terminal device 110 may upload a to-be-recognized image to the server 130, the live-body detection model 120 deployed on the server 130 outputs a recognition result after performing recognition on the to-be-recognized image, and further, the server 130 returns the recognition result to the terminal device 110, to determine whether the to-be-recognized image is the face image of the real user.

In some other application scenarios, the live-body detection model 120 on which training is completed may alternatively be directly deployed on the terminal device 110, so that the terminal device 110 can locally run the live-body detection model. When live-body detection needs to be performed, the terminal device 110 may input a to-be-recognized image to the live-body detection model 120 on which training is completed. The live-body detection model 120 outputs a recognition result after performing recognition on the to-be-recognized image, to determine whether the to-be-recognized image is the face image of the real user.

The live-body detection model provided in the embodiments of this application may be applied to a variety of different online service scenarios, which may specifically include various scenarios such as a cloud technology, artificial intelligence, intelligent traffic, or assisted driving. For example, a face recognition authentication function is involved in social software or instant messaging software, and is mainly configured for operations such as real-name authentication with identity verification and account ban appealing; a driver remote authentication procedure is involved in online car-hailing software, and is mainly configured for determining whether a current driver is a real person; and identity verification is involved in a face recognition access control system in an intelligent access control system and in account unbanning in game services.

The following technical solutions such as a live-body detection model training method and a live-body detection model apparatus, a computer-readable medium, an electronic device, and a computer program product provided in this application are described in detail with reference to the specific implementations.

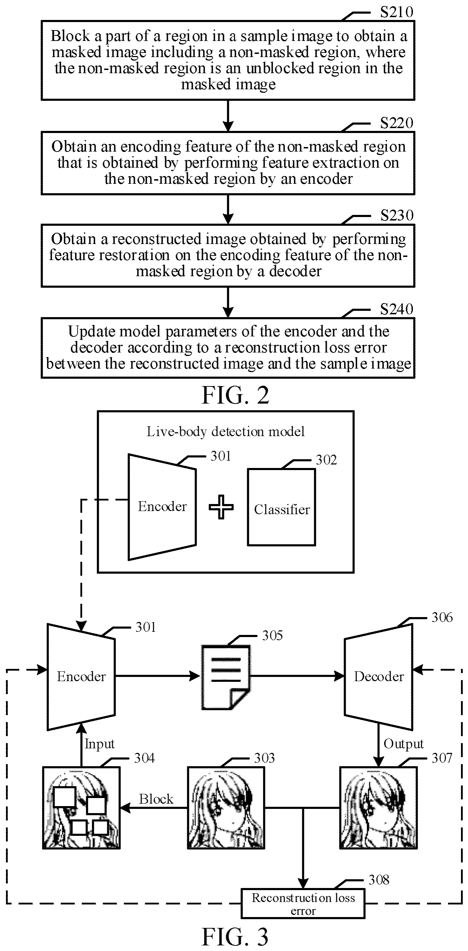

FIG. 2 shows a live-body detection model training method according to an embodiment of this application. The live-body detection model training method may be independently performed by the terminal device or the server in FIG. 1, or may be jointly performed by the terminal device and the server. In this embodiment of this application, the training method performed by the server is used as an example for description. As shown in FIG. 2, the live-body detection model includes an encoder configured to extract an encoding feature from an image, and further includes a decoder configured to process an output of the encoder. The live-body detection model training method may include the following operations S210 to S240.

S210: Block a part of a region in a sample image to obtain a masked image including a non-masked region, where the non-masked region is an unblocked region in the masked image, and a blocked region is denoted as a masked region.

S220: Obtain a region encoding feature by performing feature extraction on the non-masked region by the encoder, where the region encoding feature may also be referred to as an encoding feature of the non-masked region. In an embodiment of this application, when S220 is performed in a training process of the encoder and the decoder, the masked image may be inputted to the encoder first, and then an output of the encoder may be obtained to obtain the encoding feature of the non-masked region. In another embodiment of this application, only the non-masked region in the masked image may be inputted to the encoder, and then the output of the encoder may be obtained to obtain the encoding feature of the non-masked region. For example, tiles corresponding to the non-masked regions are inputted to the encoder, to obtain an encoding feature of a non-masked region corresponding to the tiles.

S230: Obtain an output image by performing feature restoration on the region encoding feature by the decoder. A process of feature restoration is a process in which the decoder processes the encoding feature of the non-masked region, to obtain an output image. The process of feature restoration is also continuously optimized as the encoder is trained and optimized. Finally, the decoder on which training is completed can process the encoding feature of the non-masked region outputted from the trained and optimized encoder, to obtain an image that is corresponding to the masked image and on which living object detection can be more accurately performed. The output image obtained through feature restoration may also be referred to as a reconstructed image, which may be understood as reconstructing a feature of the blocked part in the sample image, to form a reconstructed image that can be compared with an original sample image.

S240: Update model parameters of the encoder and the decoder according to a reconstruction loss value between the output image and the sample image.

In the live-body detection model training method provided in this embodiment of this application, a feature extraction capability of the encoder is trained in a manner of masked reconstruction, so that accuracy of recognizing whether the sample image corresponds to a living object by the live-body detection model can be improved. After the model parameters of the encoder and the decoder are updated, any input image may be processed by using the updated encoder and decoder. The optimized encoder obtains an encoding feature of a non-masked region of the input image, and then the decoder performs feature restoration on the encoding feature of the input image, to obtain an output image of the input image. More accurate live-body detection for the input image may be implemented based on the output image. In some cases, the reconstruction loss value may also be referred to as a reconstruction loss error, and the reconstruction loss value means content difference between output image restored by the decoder and the sample image.

FIG. 3 is a schematic diagram of a process of training a live-body detection model according to an embodiment of this application. The live-body detection model in this embodiment of this application may include an encoder 301 and a classifier 302. The encoder 301 is configured to extract an encoding feature from an input image, and the classifier 302 is configured to recognize whether the input image is a live-body image according to the encoding feature. The live-body image refers to an image collected from a living object, for example, a face image of a real user.

This embodiment of this application is mainly configured for pre-training the encoder 301 in the live-body detection model. Pre-training refers to a process of obtaining a good initialization parameter for a neural network by using a special training method before the neural network is formally trained. In this embodiment of this application, the encoder 301 is pre-trained, so that a feature extraction capability of the encoder 301 can be improved, thereby improving recognition precision of the live-body image of the live-body detection model.

As shown in FIG. 3, before the encoder 301 is pre-trained, a part of a region in a sample image 303 may be first blocked, to obtain a masked image 304 including a non-masked region. The non-masked region is an unblocked region in the masked image 304, and a blocked region in the masked image 304 is denoted as a masked region. In this embodiment of this application, a plurality of masked tiles may be used to randomly block the sample image, to form the masked image with the masked regions randomly distributed. The masked tile may be a tile having specified pixel content, for example, may be a pure white tile or a pure black tile. The masked tiles that block different regions of a masked image can be of the same size or different sizes.

The masked image 304 is inputted to the encoder 301, and the encoder 301 performs feature extraction on the non-masked region of the masked image, to obtain an encoding feature 305 of the non-masked region. The encoding feature 305 is a deep feature configured for representing image content, and may be represented as a feature vector having a specified dimension.

The encoding feature 305 continues to be inputted to a decoder 306 corresponding to the encoder 301, and the decoder 306 performs feature restoration on the encoding feature 305 of the non-masked region, to obtain an output image 307. The decoder 306 may perform feature restoration on the non-masked region according to the encoding feature 305 of the non-masked region, to obtain image content of a reconstructed non-masked region; and may further perform feature restoration on the masked region according to the encoding feature 305 of the non-masked region, to obtain image content of a reconstructed masked region. The image content of the reconstructed non-masked region and the image content of the reconstructed masked region jointly form the output image 307.

Finally, model parameters of the encoder 301 and the decoder 306 are updated according to a reconstruction loss value (that is, a reconstruction loss error 308) between the output image 307 and the sample image 303.

The foregoing pre-training process is iteratively performed, so that the model parameters of the encoder 301 and the decoder 306 can be continuously updated, thereby continuously improving a capability of the encoder 301 to extract the deep feature from the masked image, and continuously improving a capability of the decoder 306 to perform encoding feature restoration to form the output image.

In an embodiment of this application, the encoder 301 may use a ViT model, that is, a vision transformer. The ViT model applies a self-attention-based transformer model in the field of natural language processing (NLP) to an image task. Compared with a conventional convolutional neural network model in the image task, the ViT model has a stronger effect and is more cost saving than the convolutional neural network on a large data set.

The ViT model may generally include a plurality of parts such as a patch embedding unit, a positional encoding unit, and a transformer encoder.

The patch embedding unit is configured to convert an input two-dimensional image into a one-dimensional vector for encoding. First, the image is changed into a sequence formed by a plurality of patches, and then the patch sequence is converted into a one-dimensional vector by using linear transformation, similar to word embeddings in NLP. A classification vector is added to the vector obtained after patch embedding, and is configured for learning category information in a process of training the transformer encoder. It is assumed that the image is divided into N patches, and N vectors are obtained after inputting the N patches to the transformer encoder. A learnable embedding vector is manually added as a category vector configured for classification, and is inputted to the transformer encoder together with other patch embedding vectors. Finally, the first added learnable embedding vector is selected as a category prediction result.

The positional encoding unit is configured to reserve spatial position information of the image. Different from the convolutional neural network (CNN), the transformer loses position information of an original image due to the patch embedding. Therefore, the positional encoding unit needs to be used to perform position embedding, to provide additional position information.

The transformer encoder includes alternating multi-head self-attention (MSA) layers and multi-layer perceptron (MLP) blocks. Layer normalization (Layer Norm) is applied before each block, and residual connection is applied after each block.

In an embodiment of this application, the decoder 306 may use a ViT model whose parameter scale is smaller than that of the encoder 301. The parameter scale may include Patch Size, Layers, Hidden Size, MLP size, and Heads. Patch Size is a size of a tile inputted to the model, and may include, for example, sizes such as $14 \times 14$, $16 \times 16$, and $32 \times 32$. Layers is a quantity of times encoder blocks are repeatedly stacked in the transformer encoder, and may include, for example, 12, 24, and 32. Hidden Size is a corresponding vector length of each vector after the vector passes through an embedding layer, and may include, for example, 768, 1024, and 1280. MLP size is a first quantity of fully connected nodes of the MLP blocks in the transformer encoder, and is four times of Hidden size. Heads represents a quantity of heads in multi-head attention in the transformer encoder, and may include, for example, 12 and 16.

The decoder 306 uses a model that is more lightweight than that of the encoder 301, so that a convergence speed of the decoder can be improved, a training process of the decoder can be prevented from occupying excessive computing resources, and time costs and the computing resources can be saved. For example, a total quantity of the model parameters of the encoder 301 is 307M, and a total quantity of the model parameters of the decoder 306 is 86M. When it is ensured that the encoder 301 has a high training precision, the decoder 306 can complete training more quickly, thereby improving overall training efficiency of the model.

In an embodiment of this application, the model parameters may be iteratively updated based on a gradient descent algorithm and a back propagation algorithm.

The gradient descent algorithm is an optimization algorithm, and is configured for solving a parameter value of a minimized loss function. A basic idea of the gradient descent algorithm is: moving a current parameter in an opposite direction of a gradient of the parameter according to the gradient, to find a minimum value of the loss function. A principle of the gradient descent algorithm may be briefly summarized as follows: from a point in a high-dimensional space, according to a derivative of the loss function, and in a direction of a fastest decline in the loss function, moving toward an optimal solution step by step, and finally reaching the optimal solution.

The back propagation algorithm is a formal gradient descent algorithm, and is configured for training a neural network. A basic idea of the back propagation algorithm is: using a gradient of an output layer to perform back propagation to a hidden layer, to calculate a gradient of each layer, and updating the gradient to the model parameter, to expect to find the minimum value of the loss function. The back propagation combines the gradient descent algorithm with a solution of a negative gradient direction. A principle of the back propagation algorithm is: sequentially back-propagating an error at an output layer to an input layer of the neural network, calculating a partial derivative of the error for each parameter at each layer, and updating a weight parameter by using the gradient descent algorithm, to expect to minimize the error, thereby improving accuracy of the model.

In an embodiment of this application, a main algorithm logic of the encoder is segmenting a face picture into non-intersecting image tokens by using a ViT model, and then performing random blocking, where a blocking proportion is approximately 75%, only a few image tokens are left, then the left image tokens are used as inputs of the encoder, and a final output is an encoded representation of these visible tiles, which keeps a dimension consistent with an input dimension. In a pre-training stage, a main task of the encoder is to extract face features and encode the face features as a subsequent input of the decoder. In a subsequent stage, an encoder module is used as a feature extractor for a live-body detection task, and is connected to a classifier for classification.

A main objective of the decoder is to perform decoding according to the previously obtained encoded representation of the visible tiles, restore relevant features of the original image, and calculate the loss function to optimize a parameter of the model. An input of the decoder is an output of the encoder and a learnable token. A previously blocked token is replaced with the learnable token. The token is inputted to the decoder according to an original token order, and then a pixel feature of an original picture is restored. A target value is directly obtained from the original picture.

In an embodiment of this application, the involved reconstruction loss value is calculated by using a loss function. The loss function may be a reconstruction loss function. A reconstruction loss function $L_{rec}$ configured for calculating the reconstruction loss value is as follows.

$$\mathcal{L}_{rec} = \frac{1}{n} \sum_{i=1}^{n} \left\| D_\theta \left( G_\theta \left( T_v \right), T_m \right) - T_i \right\|_2^2 \mathbb{1}_{mask}(i)$$

$T_v$ represents a visible image token, that is, a non-masked region of a masked image; $T_m$ represents a masked image token, that is, a masked region of a masked image; $T_i$ represents an original sample image; D represents a decoder, and G represents an encoder; and an indicator function

$$\mathbb{1}_{mask}(i)$$

is configured for representing that a reconstruction loss is calculated only on the masked image token, n represents a total quantity of the image tokens, and θ represents a parameter of an encoder/decoder.

In an embodiment of this application, after the model parameters of the encoder and the decoder are updated according to the reconstruction loss value between the output image and the sample image, the encoder 301 and the classifier 302 may be trained jointly, to further improve the feature extraction capability of the encoder 301, and improve a classification and recognition capability of the classifier 302.

A method for jointly training the encoder 301 and the classifier 302 may include: obtaining an encoding feature of an unblocked sample image that is obtained by performing feature extraction on the sample image by the encoder; obtaining a recognition result obtained by classifying the encoding feature of the sample image by the classifier, the recognition result being configured for representing whether the sample image is a live-body image; and updating the model parameter of the encoder and a model parameter of the classifier according to the recognition result.

A fine-tuning stage is entered after pre-training of the encoder is completed. In this stage, an image of a downstream task is directly inputted to the encoder without being blocked to obtain an encoding feature. Then, a global pooling operation is used to perform a subsequent classification task, and training in the fine-tuning stage is completed with supervision. After training is completed, only the encoder module on which training is completed is reserved. A decoder module is discarded, and the output of the encoder is classified after a pooling operation, to finally complete a task of live-body detection.

According to this embodiment of this application, the masked image in which the part of the region is blocked is first used to train a feature extraction capability of the encoder, and then the sample image that is not blocked is used to train a recognition and classification capability of the classifier. Two stages of model training are used, so that a convergence speed between the encoder and the classifier can be improved, thereby improving training efficiency of the model.

In an embodiment of this application, to obtain an encoder that can encode a face feature well, supervised contrastive pre-training may be performed on the model by using a live-body and an attack picture. In this embodiment of this application, the sample image configured for training the live-body detection model may include a live-body sample image corresponding to the living object and a non-live-body sample image corresponding to a non-living object. The live-body sample image may be, for example, a real face image obtained by performing face collection on a real user, and the non-live-body sample image may be, for example, a fake face image forged or transformed to imitate the live-body sample image. The non-live-body sample image may also be referred to as an attack sample, for example, may be a face image forged in an attack manner such as video playback or paper printing.

For example, in this embodiment of this application, data sets such as Oulu-NPU, Replay-Attack, MSU-MFSD, and CASIA-FASD may be used to pre-train the model. The data sets include attacking manners such as video playback and paper printing to forge a human face.

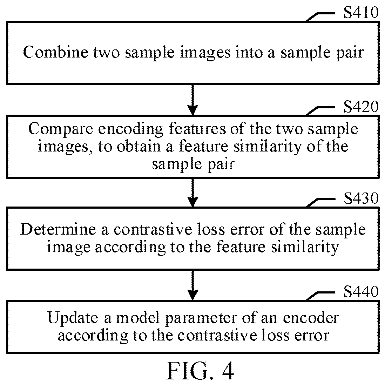

FIG. 4 shows a method for training a live-body detection model based on contrastive learning according to an embodiment of this application. The training method may be independently performed by the terminal device or the server shown in FIG. 1, or may be jointly performed by the terminal device and the server. In this embodiment of this application, the training method performed by the server is used as an example for description. As shown in FIG. 4, the live-body detection model training method may further include the following operations S410 to S440.

S410: Combine two sample images into a sample pair, where the sample pair includes a positive sample pair formed by two live-body sample images, or a negative sample pair formed by one live-body sample image and one non-live-body sample image.

S420: Compare encoding features of the two sample images in the sample pair, to obtain a feature similarity of the sample pair.

S430: Determine a contrastive loss value of the sample image according to the feature similarity, where the contrastive loss value is configured for representing a capability of an encoder to extract similar encoding features from a plurality of sample images corresponding to a living object.

S440: Update a model parameter of the encoder according to the contrastive loss value.

In this embodiment of this application, with reference to a pre-training manner of supervised contrastive learning and an image mask, a common feature between live-body samples is pulled to find common information between the live-body samples, thereby further improving a generalization capability of a network and testing accuracy of an unknown domain and an unknown live-body attack type, and resolving a problem of poor new-type attack generalization and cross-domain generalization.

In an embodiment of this application, after the model parameters of the encoder and the decoder are updated according to the reconstruction loss value between the output image and the sample image, an occasion of introducing contrastive learning may be determined according to a convergence degree of the encoder. For example, an error threshold configured for representing the convergence degree of the encoder is obtained, and the model parameter of the encoder is updated according to the contrastive loss value when the reconstruction loss value is less than a preset error threshold. In an embodiment, the error threshold may be set according to experience, or may be set according to a training situation in a training process. In some cases, the contrastive loss value may also be referred to as a contrastive loss error.

In this embodiment of this application, the contrastive learning is introduced after the encoder converges to a degree, to ensure that an encoding feature used in the contrastive learning is a deep feature extracted from the sample image and having content significance, thereby improving an overall training speed of the model.

In some other exemplary implementations, in this embodiment of this application, training processes of masked reconstruction and contrastive learning may be alternately performed. For example, after the encoder has iterated for several rounds and converged in the training process of masked reconstruction, the contrastive learning is introduced. After the encoder has iterated for several rounds and converged in the training process of contrastive learning, the encoder continues to perform masked reconstruction training. By alternately performing masked reconstruction and contrastive learning, both live-body detection accuracy and a generalization capability of the model can be considered, and a training speed of the model can be improved.

In an embodiment of this application, the method of determining a contrastive loss value of the sample image according to the feature similarity may include: respectively allocating different weight coefficients to the positive sample pair and the negative sample pair; and determining the contrastive loss value of the sample image according to the weight coefficient and the feature similarity.

In this embodiment of this application, weight coefficients are allocated for different sample pairs according to a sample type, and the weight coefficients may be used to control an impact degree of the positive sample pair or the negative sample pair on a model parameter during model training.

In an embodiment of this application, the weight coefficient of the positive sample pair is greater than the weight coefficient of the negative sample pair. Allocating a larger weight coefficient to the positive sample pair can shorten a distance between the live-body sample images, discover a similar feature between the live-body sample images, and improve a capability of recognizing the live-body sample images by the model.

In some exemplary implementations, in this embodiment of this application, the weight coefficients may be dynamically allocated to the positive sample pair and the negative sample pair. For example, the same weight coefficients may be allocated to the positive sample pair and the negative sample pair in a beginning stage of training. As a quantity of iterations of training increases, the weight coefficient of the positive sample pair may be gradually increased, or the weight coefficient of the negative sample pair may be gradually decreased. The weight coefficients of the positive sample pair and the negative sample pair are dynamically controlled, so that a training focus may be adjusted in different training stages, thereby balancing training efficiency and training reliability.

In an embodiment of this application, the positive sample pair includes a same-domain positive sample pair and a non-same-domain positive sample pair, where the same-domain positive sample pair includes two live-body image samples with the same domain label, the non-same-domain positive sample pair includes two live-body image samples with different domain labels, and the domain label is configured for indicating category information of the live-body image samples. A weight coefficient of the non-same-domain positive sample pair is greater than a weight coefficient of the same-domain positive sample pair.

For example, the domain label may include category information configured for describing an image source or a content scene. The image source may include different types of image collection devices, such as a smartphone, a camera, or a video camera. The content scene may include a scene environment feature of a collected image, for example, an indoor scene, an outdoor scene, a static background, or a dynamic background.

In this embodiment of this application, different weight coefficients are allocated to the same-domain positive sample pair and the non-same-domain positive sample pair, so that an impact degree of the same-domain positive sample pair and the non-same-domain positive sample pair on a model parameter during model training can be controlled, thereby improving flexibility of model training.

In some exemplary implementations, in this embodiment of this application, the weight coefficients may be dynamically allocated to the same-domain positive sample pair and the non-same-domain positive sample pair. For example, the same weight coefficients may be allocated to the same-domain positive sample pair and the non-same-domain positive sample pair in a beginning stage of training. As a quantity of iterations of training increases, the weight coefficient of the same-domain positive sample pair may be gradually increased, or the weight coefficient of the non-same-domain positive sample pair may be gradually decreased. The weight coefficients of the same-domain positive sample pair and the non-same-domain positive sample pair are dynamically controlled, so that a training focus may be adjusted in different training stages, thereby balancing reliability training and generalization training of the model.

In an embodiment of this application, the blocking a part of a region in a sample image to obtain a masked image including a non-masked region in operation S210 may further include: segmenting the sample image into a plurality of tiles having the same size; and randomly blocking several tiles in the sample image to obtain a masked image, where the masked image includes a masked region formed by blocked tiles and a non-masked region formed by unblocked tiles.

In this embodiment of this application, the several tiles having the same size are randomly blocked in an image segmentation manner, so that during model training, impact of a size distribution of the masked region on an image reconstruction result can be excluded, thereby improving training efficiency and accuracy of the model.

In an embodiment of this application, a quantity of tiles of a masked region in a masked image is greater than a quantity of tiles of a non-masked region. In this embodiment of this application, most content in the sample image is blocked, so that a content loss degree between the masked image and an original sample image can be expanded based on a fact that core content of image reconstruction is retained, thereby maximally discovering a feature extraction capability of the encoder, and improving training efficiency of the model.

In some exemplary implementations, in this embodiment of this application, the quantity of tiles in the masked region and the quantity of tiles in the non-masked region in the masked image may be dynamically adjusted in the training process. For example, in this embodiment of this application, a small quantity of tiles may be blocked in the beginning stage of training, so that the quantity of tiles in the masked region is less than the quantity of tiles in the non-masked region. As a number of times of iterative training increases, the quantity of tiles in the masked region is gradually increased, and the quantity of tiles in the non-masked region is decreased. In this embodiment of this application, the quantity of tiles distributed in the masked region is dynamically adjusted, so that a feature extraction difficulty of the encoder can be gradually increased and a training speed and training precision of the model can be balanced while ensuring that the encoder converges as soon as possible.

In this embodiment of this application, based on contrastive learning, an output of the encoder may be aggregated as an input for supervised contrast. In a contrast stage, both a target label and a domain label are needed, and samples are classified according to the two labels, to obtain different sample categories. Then, based on this, the samples of the same category are pulled, and the samples of different categories are pushed. The contrastive learning is performed based on an output aggregation feature of the encoder. Therefore, the contrastive learning needs to be added after the encoder converges to a degree. A time for introducing the contrastive learning may be determined according to a change of the reconstruction loss value.

In an embodiment of this application, the contrastive loss error may be calculated by using a loss function. The loss function may be a contrastive loss function. The contrastive loss function configured for calculating the contrastive loss value is shown below.

$$L_{con} = -\mathbb{E}[\sum_{j=1}^{N} \mathbb{1}_{i \neq j}(1 - \mathbb{1}_{y_i \neq y_j}) \log \frac{\lambda_l \exp(s_{i,j}/\tau)}{\lambda_l \exp(s_{i,j}/\tau) + \sum_{k=1}^{N} \mathbb{1}_{y_i \neq y_k} \exp(s_{i,k}/\tau)}]$$

In the contrastive loss function, $s_{i,j}$ and $s_{i,k}$ represent a sample pair, y represents a domain label of a sample, $\tau$ is a preset temperature coefficient, $\lambda_1$ is a preset weight coefficient, and N represents a total quantity of sample pairs.

Positive samples may be classified into two categories. One category is a same-domain positive sample, and the other category is a non-same-domain positive sample. A larger weight coefficient $\lambda$ is assigned to the non-same-domain positive sample. In this way, a positive sample distance between different domains may be further shortened. In addition, a smaller weight is assigned to a negative sample. In this way, impact of the positive sample pair can be further enhanced.

In this embodiment of this application, a disadvantage that a large amount of data needs to be pre-trained during model training is overcome, and performance is greatly improved without any additional data set. In addition, the contrastive loss function is specially designed through classification according to different labels, so that the method is more applicable to live-body detection tasks.

In an embodiment of this application, an encoding order may be determined for each tile in the masked image in advance, and then a feature is extracted for each tile according to the encoding order. In other words, position information of the tile can be introduced in a feature extraction stage of the encoder and an image restoration stage of the decoder.

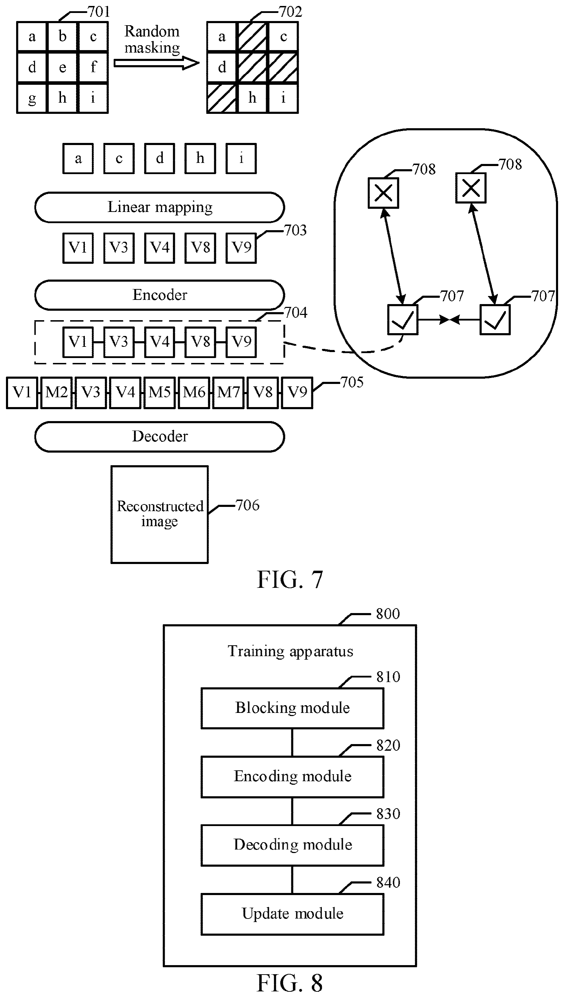

Based on this, the obtaining an encoding feature of the non-masked region that is obtained by performing feature extraction on the non-masked region by the encoder may further include: performing linear mapping on each tile in the non-masked region, to obtain a semantic feature vector of the tile; determining an encoding order of the tiles according to distribution positions of the tiles in the sample image; obtaining an encoding feature of each tile that is obtained by performing feature extraction on the semantic feature vector of the tile by the encoder; and concatenating the encoding features of the tiles to form an encoding feature of the non-masked region according to the encoding order of the tiles. In a ViT encoder, the linear mapping is implemented by using a linear layer (a fully connected layer), and is configured for mapping an input feature to a new feature space. The linear mapping plays a key role in a plurality of operations of image processing, including image block embedding, query/key/value vector generation, and feature transformation in a feedforward neural network. A core of the linear mapping is linear transformation implemented through matrix multiplication and addition. In some embodiments, the encoding order of the tiles may be a preset order, provided that the order remains the same in a training process and/or a test process and a use process of an encoder and decoder. The encoding order may be, for example, an order from left to right and from top to bottom of the image. For example, in the schematic diagram of FIG. 7, for the non-masked region, the encoding order is from left to right and from top to bottom, that is, a tile a, a tile c, a tile d, a tile h, and a tile i.

Obtaining the output image obtained by performing feature restoration on the encoding feature of the non-masked region by the decoder may further include: determining an encoding order of the tiles according to distribution positions of the tiles in the sample image; concatenating the encoding feature of the non-masked region and an encoding feature of the masked region according to the encoding order, and then inputting the concatenated encoding feature of the non-masked region and encoding feature of the masked region to the decoder; and obtaining the output image obtained by performing feature restoration on the encoding feature of the non-masked region and the encoding feature of the masked region by the decoder.

The encoding order of the tiles may be order information formed by sorting the distribution positions according to a preset arrangement direction. For example, arrangement orders of the distribution positions may be determined sequentially in an order from left to right and from top to bottom.

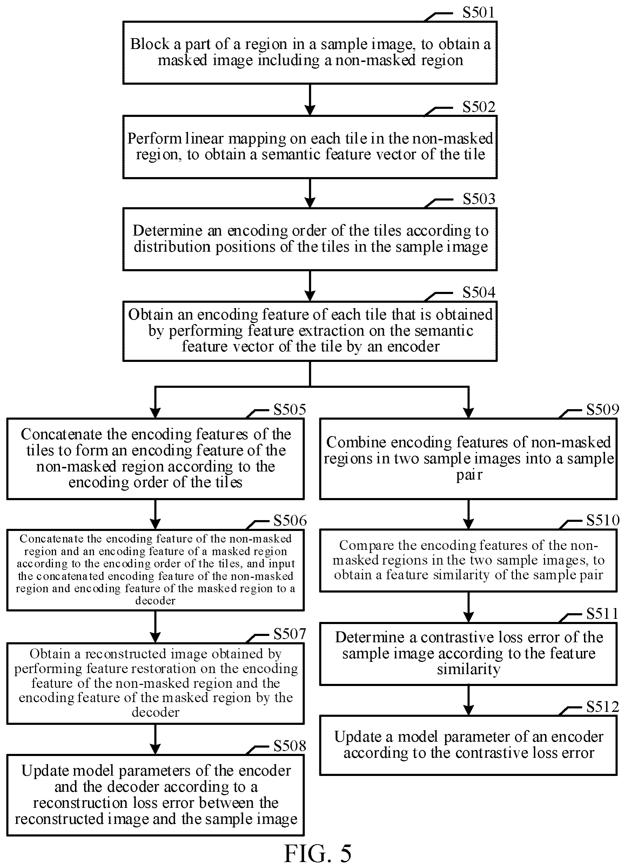

FIG. 5 shows a method for training a live-body detection model based on an encoding order according to an embodiment of this application. The training method may be independently performed by the terminal device or the server shown in FIG. 1, or may be jointly performed by the terminal device and the server. In this embodiment of this application, the training method performed by the server is used as an example for description. As shown in FIG. 5, the live-body detection model training method may further include the following operations S501 to S512.

S501: Block a part of a region in a sample image to obtain a masked image including a non-masked region, where the non-masked region is an unblocked region in the masked image.

S502: Perform linear mapping on each tile in the non-masked region, to obtain a semantic feature vector of the tile.

S503: Determine an encoding order of the tiles according to distribution positions of the tiles in the sample image.

S504: Obtain an encoding feature of each tile that is obtained by performing feature extraction on the semantic feature vector of the tile by an encoder.

S505: Concatenate the encoding features of the tiles to form an encoding feature of the non-masked region according to the encoding order of the tiles.

S506: Concatenate the encoding feature of the non-masked region and an encoding feature of the masked region according to the encoding order of the tiles, and input the concatenated encoding feature of the non-masked region and encoding feature of the masked region to a decoder.

S507: Obtain an output image obtained by performing feature restoration on the encoding feature of the non-masked region and the encoding feature of the masked region by the decoder.

S508: Update model parameters of the encoder and the decoder according to a reconstruction loss value between the output image and the sample image.

S509: Combine the encoding features of the non-masked regions in the two sample images into a sample pair.

S510: Compare the encoding features of the non-masked regions in the two sample images, to obtain a feature similarity of the sample pair.

S511: Determine a contrastive loss value of the sample image according to the feature similarity.

S512: Update the model parameter of the encoder according to the contrastive loss value.

For the specific implementations of the operations of the methods in the embodiments of this application, refer to related content in the other embodiments described above. Details are not described again herein.

In an embodiment of this application, a position feature vector may be determined in advance for each tile of the non-masked region in the masked image, and then a position feature is extracted while a semantic feature is extracted for the non-masked region. Position information of the tile is introduced in a feature extraction stage of the encoder or an image restoration stage of the decoder.

Based on this, the obtaining an encoding feature of the non-masked region that is obtained by performing feature extraction on the non-masked region by the encoder may further include: performing linear mapping on each tile in the non-masked region, to obtain a semantic feature vector of the non-masked region; determining a position feature vector of the non-masked region according to distribution positions of the tiles in the sample image; and obtaining the encoding feature of the non-masked region that is obtained by performing feature extraction on the semantic feature vector of the non-masked region and the position feature vector of the non-masked region by the encoder.

The obtaining the output image obtained by performing feature restoration on the encoding feature of the non-masked region by the decoder may further include: determining the position feature vector of the non-masked region according to the distribution positions of the tiles in the sample image; and obtaining the output image obtained by performing feature restoration on the encoding feature of the non-masked region and the position feature vector of the non-masked region by the decoder.

In this embodiment of this application, the position feature vector and the semantic feature vector may have the same vector length. When feature extraction is performed on the semantic feature vector and the position feature vector, the semantic feature vector and the position feature vector may be fused into one vector in a vector summation manner, to fuse semantic information and position information of the tile without changing the vector length.

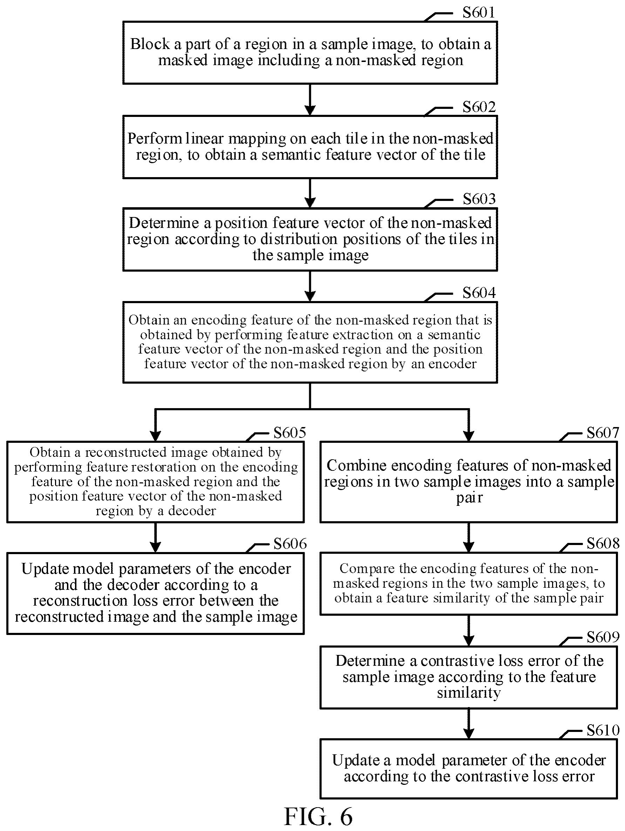

FIG. 6 shows a method for training a live-body detection model based on a tile position feature in an application scenario of this application. The training method may be independently performed by the terminal device or the server shown in FIG. 1, or may be jointly performed by the terminal device and the server. In this embodiment of this application, the training method performed by the server is used as an example for description. As shown in FIG. 6, the live-body detection model training method may further include the following operations S601 to S610.

S601: Block a part of a region in a sample image to obtain a masked image including a non-masked region, where the non-masked region is an unblocked region in the masked image.

S602: Perform linear mapping on each tile in the non-masked region, to obtain a semantic feature vector of the non-masked region.

S603: Determine a position feature vector of the non-masked region according to distribution positions of the tiles in the sample image.

S604: Obtain an encoding feature of the non-masked region that is obtained by performing feature extraction on the semantic feature vector of the non-masked region and the position feature vector of the non-masked region by an encoder.

S605: Obtain an output image obtained by performing feature restoration on the encoding feature of the non-masked region and the position feature vector of the non-masked region by a decoder.

S606: Update model parameters of the encoder and the decoder according to a reconstruction loss value between the output image and the sample image.

S607: Combine the encoding features of the non-masked regions in the two sample images into a sample pair.

S608: Compare the encoding features of the non-masked regions in the two sample images, to obtain a feature similarity of the sample pair.

S609: Determine a contrastive loss value of the sample image according to the feature similarity.

S610: Update the model parameter of the encoder according to the contrastive loss value.

For the specific implementations of the operations of the methods in the embodiments of this application, refer to related content in the other embodiments described above. Details are not described again herein.

FIG. 7 is a schematic diagram of a principle of training a live-body detection model in an application scenario according to an embodiment of this application.

As shown in FIG. 7, in a first stage of network pre-training, a part of a sample image 701 used as training data is randomly blocked, to obtain a masked image 702 having a masked region and a non-masked region. For example, the sample image 701 shown in the figure includes nine tiles a to i in total. The masked image 702 is formed after the tiles b, e, f, and g are blocked through random masking. The non-masked region of the masked image 702 includes the remaining unblocked tiles a, c, d, h, and i.

Linear mapping is performed on the unblocked tiles a, c, d, h, and i to obtain a semantic feature vector 703. An encoder performs feature extraction on the semantic feature vector 703, to obtain encoding features V1, V3, V4, V8, and V9 of the non-masked region, that is, a part of a region 704 in FIG. 7.

The encoding features V1, V3, V4, V8, and V9 outputted by the encoder and encoding features M2, M5, M6, and M7 of the blocked masked region are arranged and concatenated according to the distribution positions of the tiles, to obtain an encoding feature 705 of the masked image.

The encoding feature 705 of the masked image is inputted to a decoder, the decoder reconstructs a feature of an original image of each tile according to the inputted encoding feature 705, and the decoder may reconstruct each pixel of the original image, to obtain an output image (that is, a reconstructed image 706).

After a loss function in the first stage converges to a specified threshold, the network pre-training enters a second stage, and a contrastive learning algorithm is additionally added to the second stage. First, the features of the tiles outputted by the encoder are concatenated and aggregated, to obtain a representative token of each sample. Then, distinguishing is performed according to a domain label and a live-body label. A distance between live-body samples 707 is shortened, and a distance between the live-body sample 707 and an attack sample 708 is lengthened. Different weights are assigned to the loss function for samples of different categories, to perform second-stage pre-training. In this case, a loss is a linear combination of a contrastive loss and a reconstruction loss. Such a design can ensure that during comparison, the feature extracted by the decoder can have a significance rather than a random state at the beginning.

Each operation in the method of this application is described in a specific order in the accompanying drawings, however, this does not request or imply that the operations are performed according to the specific order, or all shown operations are necessarily performed so as to implement a desired result. Additionally or alternatively, some operations may be omitted, a plurality of operations may be combined into one operation for execution, and/or one operation may be decomposed into a plurality of operations for execution, and the like.

Apparatus embodiments of this application are described below, and may be configured for performing the live-body detection model training method in the foregoing embodiments of this application. FIG. 8 is a schematic structural block diagram of a live-body detection model training apparatus according to an embodiment of this application. As shown in FIG. 8, a live-body detection model training apparatus 800 includes:

a blocking module 810, configured to block a part of a region in a sample image to obtain a masked image including a non-masked region, the non-masked region being an unblocked region in the masked image;

an encoding module 820, configured to obtain an encoding feature of the non-masked region that is obtained by performing feature extraction on the non-masked region by an encoder;

a decoding module 830, configured to obtain an output image obtained by performing feature restoration on the encoding feature of the non-masked region by a decoder; and

an update module 840, configured to update model parameters of the encoder and the decoder according to a reconstruction loss value between the output image and the sample image.

In some embodiments of this application, based on the foregoing technical solutions, the sample image includes a live-body sample image corresponding to a living object and a non-live-body sample image corresponding to a non-living object. The live-body detection model training apparatus 800 further includes:

a sample pair obtaining module, configured to combine two sample images into a sample pair, the sample pair including a positive sample pair formed by two live-body sample images, or a negative sample pair formed by one live-body sample image and one non-live-body sample image;

a feature comparison module, configured to compare encoding features of the two sample images in the sample pair, to obtain a feature similarity of the sample pair;

an error determining module, configured to determine a contrastive loss value of the sample image according to the feature similarity; and

a parameter update module, configured to update the model parameter of the encoder according to the contrastive loss value.

In some embodiments of this application, based on the foregoing technical solutions, the parameter update module is further configured to: obtain an error threshold configured for representing a convergence degree of the encoder; and update the model parameter of the encoder according to the contrastive loss value when the reconstruction loss value is less than the error threshold.

In some embodiments of this application, based on the foregoing technical solutions, the error determining module is further configured to: respectively allocate different weight coefficients to the positive sample pair and the negative sample pair; and determine the contrastive loss value of the sample image according to the weight coefficient and the feature similarity.

In some embodiments of this application, based on the foregoing technical solutions, the weight coefficient of the positive sample pair is greater than the weight coefficient of the negative sample pair.

In some embodiments of this application, based on the foregoing technical solutions, the positive sample pair includes a same-domain positive sample pair and a non-same-domain positive sample pair, the same-domain positive sample pair including two live-body image samples with the same domain label, the non-same-domain positive sample pair including two live-body image samples with different domain labels, and the domain label is configured for indicating category information of the live-body image samples; and a weight coefficient of the non-same-domain positive sample pair is greater than a weight coefficient of the same-domain positive sample pair.

In some embodiments of this application, based on the foregoing technical solution, the blocking module 810 includes:

an image segmentation module, configured to segment the sample image into a plurality of tiles having the same size; and

a tile blocking module, configured to randomly block several tiles in the sample image to obtain a masked image, the masked image including a masked region formed by blocked tiles and a non-masked region formed by unblocked tiles.

In some embodiments of this application, based on the foregoing technical solutions, a quantity of tiles in the masked region is greater than a quantity of tiles in the non-masked region.

In some embodiments of this application, based on the foregoing technical solution, the encoding module 820 includes:

a first mapping module, configured to perform linear mapping on each tile in the non-masked region, to obtain a semantic feature vector of the tile;

a first order determining module, configured to determine an encoding order of the tiles according to distribution positions of the tiles in the sample image;

a first feature extraction module, configured to obtain an encoding feature of each tile that is obtained by performing feature extraction on the semantic feature vector of the tile by the encoder; and

a feature concatenating module, configured to concatenate the encoding features of the tiles according to the encoding order of the tiles to form the encoding feature of the non-masked region.

In some embodiments of this application, based on the foregoing technical solution, the encoding module 820 includes:

a second mapping module, configured to perform linear mapping on each tile in the non-masked region, to obtain a semantic feature vector of the non-masked region;

a first position determining module, configured to determine a position feature vector of the non-masked region according to a distribution position of the tile in the sample image; and

a second feature extraction module, configured to obtain the encoding feature of the non-masked region that is obtained by performing feature extraction on the semantic feature vector of the non-masked region and the position feature vector of the non-masked region by the encoder.

In some embodiments of this application, based on the foregoing technical solution, the decoding module 830 includes:

a second order determining module, configured to determine an encoding order of the tiles according to distribution positions of the tiles in the sample image;

a feature input module, configured to concatenate the encoding feature of the non-masked region and an encoding feature of the masked region according to the encoding order, and then input the concatenated encoding feature of the non-masked region and encoding feature of the masked region to the decoder; and

a first feature restoration module, configured to obtain the output image obtained by performing feature restoration on the encoding feature of the non-masked region and the encoding feature of the masked region by the decoder.

In some embodiments of this application, based on the foregoing technical solution, the decoding module 830 includes:

a second position determining module, configured to determine a position feature vector of the non-masked region according to a distribution position of the tile in the sample image; and

a second feature restoration module, configured to obtain the output image obtained by performing feature restoration on the encoding feature of the non-masked region and the position feature vector of the non-masked region by the decoder.

In some embodiments of this application, based on the foregoing technical solutions, the live-body detection model further includes a classifier configured to recognize a live-body image according to the encoding feature. The live-body detection model training apparatus 800 further includes:

a third feature extraction module, configured to obtain an encoding feature of an unblocked sample image that is obtained by performing feature extraction on the sample image by the encoder;

a feature classification module, configured to obtain a recognition result obtained by classifying the encoding feature by the classifier, the recognition result being configured for representing whether the sample image is a live-body image; and

a parameter update module, configured to update the model parameter of the encoder and a model parameter of the classifier according to the recognition result.

Specific details of the live-body detection model training apparatus provided in each embodiment of this application are described in detail in the corresponding method embodiments, and are not described herein again.

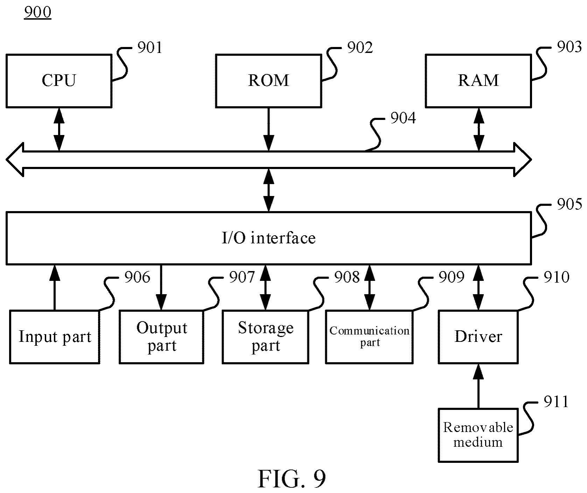

FIG. 9 is a schematic structural block diagram of a computer system of an electronic device for implementing an embodiment of this application.

A computer system 900 of the electronic device shown in FIG. 9 is merely an example, and does not constitute any limitation on functions and use ranges of the embodiments of this application.

As shown in FIG. 9, the computer system 900 includes a central processing unit (CPU) 901, which may execute various proper actions and processing based on a program stored in a read-only memory (ROM) 902 or a program loaded from a storage part 908 into a random access memory (RAM) 903. The random access memory 903 further stores various programs and data required by system operations. The central processing unit 901, the read-only memory 902, and the random access memory 903 are connected to each other via a bus 904. An input/output (I/O) interface 905 is also connected to the bus 904.

The following components are connected to the input/output interface 905: an input part 906 including a keyboard, a mouse, and the like; an output part 907 including a cathode ray tube (CRT), a liquid crystal display (LCD), a speaker, and the like; a storage part 908 including a hard disk, and the like; and a communication part 909 including a network interface card such as a local area network card or a modem. The communication part 909 performs communication processing by using a network such as the Internet. A driver 910 is also connected to the input/output interface 905 as required. A removable medium 911, such as a magnetic disk, an optical disc, a magneto-optical disk, or a semiconductor memory, is installed on the driver 910 as required, so that a computer program read from the removable medium 911 is installed into the storage part 908 as required.

Particularly, according to the embodiments of this application, the processes described in the various method flowcharts may be implemented as computer software programs. For example, this embodiment of this application includes a computer program product, the computer program product includes a computer program carried on a computer-readable medium, and the computer program includes program code configured for performing the methods shown in the flowcharts. In such an embodiment, the computer program may be downloaded and installed through the communication part 909 from the network, and/or installed from the removable medium 911. When the computer program is executed by the central processing unit 901, various functions defined in the system of this application are performed.

The computer-readable medium shown in this embodiment of this application may be a computer-readable signal medium or a computer-readable storage medium, or any combination thereof. The computer-readable storage medium may be, for example, but is not limited to, an electric, magnetic, optical, electromagnetic, infrared, or semiconductor system, apparatus, or component, or any combination thereof. More specific examples of the computer-readable storage media may include, but are not limited to, an electrical connection having one or more wires, a portable computer disk, a hard disk, a random access memory (RAM), a read-only memory (ROM), an erasable programmable read only memory (EPROM), a flash memory, an optical fiber, a compact disc read-only memory (CD-ROM), an optical storage device, a magnetic storage device, or any suitable combination thereof. In this application, the computer-readable storage medium may be any tangible medium that includes or stores a program. The program may be used by or used in combination with an instruction execution system, apparatus, or device. In this application, the computer-readable signal medium may include a data signal propagated in a baseband or as part of a carrier, and computer-readable program code is carried therein. A data signal propagated in such a way may be in a plurality of forms, including, but not limited to, an electromagnetic signal, an optical signal, or any suitable combination thereof. The computer-readable signal medium may alternatively be any computer-readable medium other than the computer-readable storage medium. The computer-readable medium may send, propagate, or transmit a program used by or in combination with an instruction execution system, apparatus or device. The program code included in the computer-readable medium may be transmitted by using any suitable medium, including, but not limited to, a wireless medium, a wired medium, and the like, or any suitable combination thereof.

The flowcharts and block diagrams in the accompanying drawings illustrate possible system architectures, functions, and operations that may be implemented by a system, a method, and a computer program product according to various embodiments of this application. In this regard, each box in the flowchart or the block diagram may represent a module, a program segment, or a part of code. The module, the program segment, or the part of code includes one or more executable instructions configured for implementing specified logic functions. In some alternative implementations, the functions labeled in the boxes may alternatively occur in an order different from that labeled in the accompanying drawings. For example, two boxes shown in succession can actually be performed substantially in parallel, or sometimes the two boxes may be performed in a reverse order. This is determined according to a related function. Each box in the block diagram or the flowchart and a combination of boxes in the block diagram or the flowchart may be implemented by a dedicated hardware-based system that performs a specified function or operation, or may be implemented by a combination of dedicated hardware and computer instructions.

Although several modules or units of a device configured to perform operations are mentioned in the above detailed descriptions, such division is not mandatory. Actually, according to the implementations of this application, features and functions of two or more modules or units described above may be specifically implemented in one module or unit. On the contrary, the features and functions of one module or unit described above may be further divided to be embodied by a plurality of modules or units.

Through the foregoing descriptions of the implementations, a person skilled in the art may readily understand that the exemplary implementations described herein may be implemented by software, or may be implemented by combining software with necessary hardware. Therefore, the technical solutions of the implementations of this application may be implemented in a form of a software product. The software product may be stored in a non-volatile storage medium (which may be a CD-ROM, a USB flash drive, a removable hard disk, or the like) or on a network, including several instructions for instructing a computing device (which may be a personal computer, a server, a touch terminal, a network device, or the like) to perform the methods according to the implementations of this application.

A person skilled in the art can easily figure out other implementations of this application after considering the specification and practicing the disclosure that is disclosed herein. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the drawings, and various modifications and changes may be made without departing from the scope of this application. The scope of this application is only limited to the appended claims.

**Claims**

1. A training method for a live-body detection model, the live-body detection model comprising an encoder configured to extract an encoding feature from an image, and the encoding feature being configured to recognize whether an object in the image is a living object; and the training method comprising:

   blocking a part of a region in a sample image to obtain a masked image comprising a non-masked region, the non-masked region being an unblocked region in the masked image;
   obtaining a region encoding feature by performing feature extraction on the non-masked region by the encoder;
   obtaining an output image by performing feature restoration on the region encoding feature by a decoder; and
   updating model parameters of the encoder and the decoder according to a reconstruction loss value between the output image and the sample image.

2. The live-body detection model training method according to claim 1, wherein the sample image comprises a live-body sample image corresponding to the living object and a non-live-body sample image corresponding to a non-living object; and after the updating model parameters of the encoder and the decoder according to a reconstruction loss value between the output image and the sample image, the method further comprises:

   combining two sample images into a sample pair, the sample pair comprising a positive sample pair formed by two live-body sample images, or a negative sample pair formed by one live-body sample image and one non-live-body sample image;
   comparing encoding features of the two sample images in the sample pair, to obtain a feature similarity of the sample pair;
   determining a contrastive loss value of the sample image according to the feature similarity, the contrastive loss value being configured for representing a capability of the encoder to extract similar encoding features from a plurality of sample images corresponding to the living object; and
   updating the model parameter of the encoder according to the contrastive loss value.

3. The live-body detection model training method according to claim 1 or 2, wherein the updating the model parameter of the encoder according to the contrastive loss value comprises:

   obtaining an error threshold corresponding to the encoder; and
   updating the model parameter of the encoder according to the contrastive loss value when the reconstruction loss value is less than the error threshold.

4. The live-body detection model training method according to any one of claims 1 to 3, wherein the determining a contrastive loss value of the sample image according to the feature similarity comprises:

> respectively allocating different weight coefficients to the positive sample pair and the negative sample pair; and determining the contrastive loss value of the sample image according to the weight coefficient and the feature similarity.

5. The live-body detection model training method according to any one of claims 1 to 4, wherein the weight coefficient of the positive sample pair is greater than the weight coefficient of the negative sample pair.

6. The live-body detection model training method according to any one of claims 1 to 5, wherein the positive sample pair comprises a same-domain positive sample pair and a non-same-domain positive sample pair, the same-domain positive sample pair comprising two live-body image samples with a same domain label, the non-same-domain positive sample pair comprising two live-body image samples with different domain labels, and the domain label is configured for indicating category information of the live-body image sample; and a weight coefficient of the non-same-domain positive sample pair is greater than a weight coefficient of the same-domain positive sample pair.

7. The live-body detection model training method according to any one of claims 1 to 6, wherein the blocking a part of a region in a sample image to obtain a masked image comprising a non-masked region comprises:

> segmenting the sample image into a plurality of tiles having a same size; and randomly blocking several tiles in the sample image to obtain a masked image, the masked image comprising a masked region formed by blocked tiles and a non-masked region formed by unblocked tiles.

8. The live-body detection model training method according to any one of claims 1 to 7, wherein a quantity of tiles in the masked region is greater than a quantity of tiles in the non-masked region.

9. The live-body detection model training method according to any one of claims 1 to 8, wherein the obtaining a region encoding feature obtained by performing feature extraction on the non-masked region by the encoder comprises:

> performing linear mapping on each tile in the non-masked region, to obtain a semantic feature vector of the tile; determining an encoding order of the tiles according to distribution positions of the tiles in the sample image; obtaining an encoding feature of each tile that is obtained by performing feature extraction on the semantic feature vector of the tile by the encoder; and concatenating the encoding features of the tiles according to the encoding order of the tiles to form the region encoding feature.

10. The live-body detection model training method according to any one of claims 1 to 8, wherein the obtaining a region encoding feature obtained by performing feature extraction on the non-masked region by the encoder comprises:

> performing linear mapping on each tile in the non-masked region, to obtain a semantic feature vector of the non-masked region; determining a position feature vector of the non-masked region according to a distribution position of the tile in the sample image; and obtaining the region encoding feature obtained by performing feature extraction on the semantic feature vector of the non-masked region and the position feature vector of the non-masked region by the encoder.

11. The live-body detection model training method according to any one of claims 1 to 10, wherein the obtaining an output image obtained by performing feature restoration on the region encoding feature by a decoder comprises:

> determining the encoding order of the tiles according to the distribution positions of the tiles in the sample image; concatenating the region encoding feature and an encoding feature of the masked region according to the encoding order, and then inputting the concatenated region encoding feature and encoding feature of the masked region to the decoder; and
obtaining the output image obtained by performing feature restoration on the region encoding feature and the encoding feature of the masked region by the decoder.

12. The live-body detection model training method according to any one of claims 1 to 11, wherein the obtaining an output image obtained by performing feature restoration on the region encoding feature by a decoder comprises:

determining the position feature vector of the non-masked region according to the distribution position of the tile in the sample image; and
obtaining the output image obtained by performing feature restoration on the region encoding feature and the position feature vector of the non-masked region by the decoder.

13. The live-body detection model training method according to any one of claims 1 to 12,
wherein the live-body detection model further comprises a classifier configured to recognize a live-body image according to the encoding feature; and after the updating model parameters of the encoder and the decoder according to a reconstruction loss value between the output image and the sample image, the method further comprises:

obtaining an encoding feature of an unblocked sample image that is obtained by performing feature extraction on the sample image by the encoder;
obtaining a recognition result obtained by classifying the encoding feature of the sample image by the classifier, the recognition result being configured for representing whether the sample image is a live-body image; and
updating the model parameter of the encoder and a model parameter of the classifier according to the recognition result.

14. A live-body detection model training apparatus, the live-body detection model comprising an encoder configured to extract an encoding feature from an image, and the encoding feature being configured to recognize whether an object in the image is a living object; and the training apparatus comprising:

a blocking module, configured to block a part of a region in a sample image to obtain a masked image comprising a non-masked region, the non-masked region being an unblocked region in the masked image;
an encoding module, configured to obtain a region encoding feature obtained by performing feature extraction on the non-masked region by the encoder; and
a decoding module, configured to obtain an output image obtained by performing feature restoration on the region encoding feature by a decoder; and
an update module, configured to update model parameters of the encoder and the decoder according to a reconstruction loss value between the output image and the sample image.

15. A computer-readable medium, the computer-readable medium having a computer program stored therein, and the computer program, when executed by a processor, implementing the live-body detection model training method according to any one of claims 1 to 13.

16. An electronic device, comprising:

a processor; and
a memory, configured to store executable instructions of the processor,
the processor being configured to execute the executable instructions to implement the live-body detection model training method according to any one of claims 1 to 13.

17. A computer program product, comprising a computer program or instructions, the computer program or the instructions, when executed by a processor, implementing the live-body detection model training method according to any one of claims 1 to 13.

FIG. 1

⌐— S210

Block a part of a region in a sample image to obtain a masked image including a non-masked region, where the non-masked region is an unblocked region in the masked image

⌐— S220

Obtain an encoding feature of the non-masked region that is obtained by performing feature extraction on the non-masked region by an encoder

⌐— S230

Obtain a reconstructed image obtained by performing feature restoration on the encoding feature of the non-masked region by a decoder

⌐— S240

Update model parameters of the encoder and the decoder according to a reconstruction loss error between the reconstructed image and the sample image

## FIG. 2

Live-body detection model

⌐— 301        ⌐— 302

Encoder  ✛  Classifier

⌐— 301        ⌐— 305        ⌐— 306

Encoder  →  📄  →  Decoder

Input  ⌐— 304        ⌐— 303        ⌐— 307

Block

Output

⌐— 308

Reconstruction loss error

## FIG. 3

S410

Combine two sample images into a sample pair

S420

Compare encoding features of the two sample images, to obtain a feature similarity of the sample pair

S430

Determine a contrastive loss error of the sample image according to the feature similarity

S440

Update a model parameter of an encoder according to the contrastive loss error

FIG. 4

S501

Block a part of a region in a sample image, to obtain a masked image including a non-masked region

S502

Perform linear mapping on each tile in the non-masked region, to obtain a semantic feature vector of the tile

S503

Determine an encoding order of the tiles according to distribution positions of the tiles in the sample image

S504

Obtain an encoding feature of each tile that is obtained by performing feature extraction on the semantic feature vector of the tile by an encoder

S505

Concatenate the encoding features of the tiles to form an encoding feature of the non-masked region according to the encoding order of the tiles

S506

Concatenate the encoding feature of the non-masked region and an encoding feature of a masked region according to the encoding order of the tiles, and input the concatenated encoding feature of the non-masked region and encoding feature of the masked region to a decoder

S507

Obtain a reconstructed image obtained by performing feature restoration on the encoding feature of the non-masked region and the encoding feature of the masked region by the decoder

S508

Update model parameters of the encoder and the decoder according to a reconstruction loss error between the reconstructed image and the sample image

S509

Combine encoding features of non-masked regions in two sample images into a sample pair

S510

Compare the encoding features of the non-masked regions in the two sample images, to obtain a feature similarity of the sample pair

S511

Determine a contrastive loss error of the sample image according to the feature similarity

S512

Update a model parameter of an encoder according to the contrastive loss error

FIG. 5

```
                                    ┌─ S601
┌──────────────────────────────────────────────┐
│   Block a part of a region in a sample image,  │
│   to obtain a masked image including a          │
│   non-masked region                            │
└──────────────────────────────────────────────┘
                    │
                    ▼              ┌─ S602
┌──────────────────────────────────────────────┐
│  Perform linear mapping on each tile in the    │
│  non-masked region, to obtain a semantic       │
│  feature vector of the tile                    │
└──────────────────────────────────────────────┘
                    │
                    ▼              ┌─ S603
┌──────────────────────────────────────────────┐
│  Determine a position feature vector of the    │
│  non-masked region according to distribution   │
│  positions of the tiles in the sample image    │
└──────────────────────────────────────────────┘
                    │
                    ▼              ┌─ S604
┌──────────────────────────────────────────────┐
│  Obtain an encoding feature of the non-masked  │
│  region that is obtained by performing feature │
│  extraction on a semantic feature vector of    │
│  the non-masked region and the position        │
│  feature vector of the non-masked region by    │
│  an encoder                                    │
└──────────────────────────────────────────────┘
```

S605

Obtain a reconstructed image obtained by performing feature restoration on the encoding feature of the non-masked region and the position feature vector of the non-masked region by a decoder

S606

Update model parameters of the encoder and the decoder according to a reconstruction loss error between the reconstructed image and the sample image

S607

Combine encoding features of non-masked regions in two sample images into a sample pair

S608

Compare the encoding features of the non-masked regions in the two sample images, to obtain a feature similarity of the sample pair

S609

Determine a contrastive loss error of the sample image according to the feature similarity

S610

Update a model parameter of the encoder according to the contrastive loss error

FIG. 6

FIG. 7

FIG. 8

900

901

CPU

902

ROM

903

RAM

904

I/O interface — 905

906 907 908 909 910

Input part | Output part | Storage part | Communication part | Driver

911

Removable medium

FIG. 9

## INTERNATIONAL SEARCH REPORT

| International application No. |
| --- |
| **PCT/CN2024/103405** |

**A.    CLASSIFICATION OF SUBJECT MATTER**

G06V 10/774(2022.01)i

According to International Patent Classification (IPC) or to both national classification and IPC

**B.    FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, ENTXTC, WOTXT, USTXT, CNKI, IEEE: 活体, 掩码, 遮挡, 重建, 编码器, 解码器, 位置编码, live, mask, obscuration, reconstruct, encoder, decoder, ViT, position, face anti spoofing, patch

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116721315 A (TENCENT TECHNOLOGY (SHENZHEN) CO., LTD.) 08 September 2023 (2023-09-08) <br> description, paragraphs [24]-[174] | 1-17 |
| X | ZHENG, Tianyi et al. "EnfoMax: Domain Entropy and Mutual Information Maximization for Domain Generalized Face Anti-spoofing" <br> *arXiv:2302.08674v2*, 04 June 2023 (2023-06-04), <br> pages 1-13 | 1-8, 13-17 |
| A | CN 105975547 A (WUHAN UNIVERSITY) 28 September 2016 (2016-09-28) <br> entire document | 1-17 |
| A | CN 114782698 A (CHONGQING NORMAL UNIVERSITY) 22 July 2022 (2022-07-22) <br> entire document | 1-17 |
| A | CHU, Xiangxiang et al. "CONDITIONAL POSITIONAL ENCODINGS FOR VISION TRANSFORMERS" <br> *arXiv:2102.10882v3*, 13 February 2023 (2023-02-13), <br> pages 1-19 | 1-17 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 August 2024** | **03 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/103405**

| Patent document cited in search report | | | Publication date (day/month/year) | Patent family member(s) | | | Publication date (day/month/year) |
|---|---|---|---|---|---|---|---|
| CN | 116721315 | A | 08 September 2023 | HK | 40092326 | A0 | 22 December 2023 |
| CN | 105975547 | A | 28 September 2016 | | None | | |
| CN | 114782698 | A | 22 July 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023109906078